# EUROPÄISCHE PATENTSCHRIFT

(11) **EP 2 618 116 B1**
(45) Veröffentlichungstag und Bekanntmachung des Hinweises auf die Patenterteilung: **01.11.2017**
(21) Anmeldenummer: 13000251.2
(22) Anmeldetag: 18.01.2013
(51) Int. Cl.: G01F 15/00, G01F 15/04

(54) **Verfahren zur Messung eines Volumenstromes, rohrförmiges Adapterstück sowie Messvorrichtung zur Messung eines Volumenstromes**
Method for measuring a volume flow, tubular adapter piece and measuring device for measuring a volume flow
Procédé de mesure d'un débit de volume, pièce d'adaptateur tubulaire et dispositif de mesure destiné à mesurer un débit de volume

(30) Priorität: 21.01.2012 DE 102012001160
(43) Veröffentlichungstag der Anmeldung: 24.07.2013
(73) Patentinhaber: Testo SE & Co. KGaA, 79853 Lenzkirch (DE)
(72) Erfinder: Rombach, Martin, 79853 Lenzkirch (DE); Zhuomin, Zhu, 78052 Obereschach (DE)
(74) Vertreter: Börjes-Pestalozza, Henrich

(56) Entgegenhaltungen:
- US-A- 3 748 901
- US-A- 5 683 032
- US-A1- 2003 154 803
- US-B1- 6 199 434

## Beschreibung

Die Erfindung betrifft eine Messvorrichtung zur Messung eines Volumenstromes mit einem eine Einlassöffnung und eine Auslassöffnung aufweisenden Messtrichter, wobei die Einlassöffnung auf eine Zu- oder Abluftöffnung einer Gebäudelüftungsanlage setzbar ist, mit einem an die Auslassöffnung des Messtrichters angeschlossenen Anemometer, und mit einem zwischen der Auslassöffnung des Messtrichters und dem Anemometer einsetzbaren, rohrförmigen Adapterstück, das ein erstes und ein zweites Rohrende aufweist in dessen Rohrinnenraum ein Strömungsgleichrichter angeordnet ist.

Neben anderen Einsatzbereichen, finden sie auch bei der Messung und Einstellung von Gebäudelüftungsanlagen mit speziellen Auslässen, die einer kontrollierten und energie-effizienten Raumlüftung dienen sollen, Anwendung. Dabei wird ein Messtrichter mit einem nachgeschalteten Anemometer mit seiner Einlassöffnung auf eine Zu- oder Abluftöffnung der Gebäudelüftungsanlage gesetzt, und der die Zu- oder Abluftöffnung durchsetzende Volumenstrom gemessen.

Es hat sich herausgestellt, dass je nach vorhandenem Auslass erhebliche Messfehler bei der Volumenstrommessung auftreten, die eine korrekte Einstellung der Gebäudelüftungsanlage erschweren können. Für eine korrekte Messung des Volumenstroms war es daher bisher meist erforderlich, dass der Auslass vor der Messung abmontiert wird, was sehr aufwendig ist.

Aus US 2003/0154803 A1 sind ein Verfahren und eine Vorrichtung zur Messung von Luftströmungen durch Heizungs-, Lüftungs- und Klimatechnik-Roste bekannt, bei welchen ein Strömumgsgleichrichter fest zwischen einer Haube und einem Anemometer angeordnet ist.

Aus US 5 683 032 A sind ein Luftmessungsgerät und Verfahren für eine Farbzerstäubung mit einer rotierenden Glocke bekannt, wobei in einem Abschnitt eines stabförmigen Messwerkzeugs ein Wabenmaterial aus Edelstahl fest angeordnet ist.

Aus US 3 748 901 A ist ein Luftströmungsausgleichgerät bekannt, bei welchem ein Strömungsgleichrichter fest an einer Haube ausgebildet ist.

Aus US 6 199 434 B1 ist ein kompaktes Gerät zur Messung von Gas bei variablen Brücken bekannt, bei welchem ein Geschwindigkeitsmesser mit einem Flansch auf einen Trägerring, welcher einen Stapel von porösen bzw. perforierten Platten enthält, aufsetzbar ist.

Die Erfindung stellt sich die Aufgabe, eine Messvorrichtung bereitzustellen, die auf einfache und flexible Weise eine möglichst korrekte Messung ermöglicht.

Zur Lösung dieser Aufgabe werden erfindungsgemäß die Merkmale des Anspruchs 1 vorgeschlagen. Bei der erfindungsgemäßen Messvorrichtung ist zur Lösung der Aufgabe insbesondere vorgesehen dass der Messtrichter an seiner Auslassöffnung eine Anemometeraufnahme aufweist, in welche das erste Rohrende des Adapterstücks einsetzbar ist, dass das Adapterstück an dem zweiten Rohrende eine Anemometeraufnahme aufweist, in die das Anemometer einsetzbar ist, und dass bei dem Adapterstück der Strömungsgleichrichter an dem ersten Rohrende angeordnet ist, und die Anemometeraufnahme des Messtrichters so ausgebildet ist, dass in diese wahlweise das Anemometer oder das erste Rohrende des Adapterstücks einsetzbar ist.

Wenn das erste Rohrende passend zu der Anemometeraufnahme an dem zweiten Rohrende ausgebildet ist, ist es möglich, bereits bestehende Messvorrichtungen mit einem Messtrichter und einem Anemometer mit einem erfindungsgemäßen Adapterstück ohne großen Aufwand aufzurüsten bzw. die Messvorrichtung an unterschiedliche Bedingungen anzupassen. Dabei ist ein weiterer Vorteil, dass das Anemometer wahlweise mit dem Adapterstück und mit dem Messtrichter verbindbar ist.

So ist es denkbar, dass bei einer Messung von nicht verwirbelten oder nicht turbulenten oder laminaren Volumenströmen auf die Verwendung des zwischengeschalteten Adapterstücks verzichtet werden kann oder dass, um eine Steigerung des Verwirbelungen reduzierenden Effektes des Adapterstücks mit dem Strömungsgleichrichter zu erzielen, zwei oder drei oder eine Vielzahl von rohrförmigen Adapterstücken derselben Art hintereinander zwischen der Auslassöffnung des Messtrichters und dem Anemometer zusammengeschlossen werden können. Es hat sich aber herausgestellt, dass das erfindungsgemäße Adapterstück eine Volumenstrommessung eines wenig oder gar nicht verwirbelten oder turbulenten Volumenstroms nicht verfälscht oder stört. Das Adapterstück kann somit in allen Messsituationen am Messtrichter verbleiben.

Besonders günstig kann es sein, wenn der Strömungsgleichrichter an dem ersten Rohrende angeordnet ist. Somit kann der Volumenstrom nach dem Passieren der Eintrittsöffnung in den Strömungsgleichrichter eintreten. In diesem kann der Volumenstrom gleichgerichtet werden und/oder es können so mögliche Turbulenzen reduziert werden. Anschließend kann der Volumenstrom weiter durch den, vorzugsweise hindernisfreien, Rohrinnenraum des Adapterstücks fließen. Die Verwirbelungen des Volumenstroms können zunächst durch den Strömungsgleichrichter reduziert werden und sich anschließend beim Passieren des sich im Anschluss an den Strömungsgleichrichter fortsetzenden Adapterstücks weiter beruhigen und abklingen, bevor der Volumenstrom das Adapterstück über die Austrittsöffnung verlässt und beispielsweise einem Anemometer für eine Messung zugeführt wird. Dabei ist denkbar, dass der Strömungsgleichrichter am ersten Rohrende der der Eintrittsöffnung näheren Hälfte, bevorzugt in dem der Eintrittsöffnung näheren Drittel oder besonders bevorzugt in dem der Eintrittsöffnung näheren Fünftel des Adapterstücks oder sogar direkt an der Eintrittsöffnung angeordnet ist. Je näher der Strömungsgleichrichter an der Eintrittsöffnung angeordnet ist, desto mehr Länge des Adapters steht zur weiteren Strömungsberuhigung hinter dem Strömungsgleichrichter zur Verfügung.

Für eine effektive Reduzierung von Verwirbelungen im Volumenstrom kann es günstig sein, wenn der Strömungsgleichrichter wenigstens zwei parallel zueinander verlaufende Durchtrittsöffnungen aufweist. Die Durchtrittsöffnungen können in Längserstreckungsrichtung des rohrförmigen Adapterstücks ausgebildet sein.

Dabei kann es auch günstig sein, wenn die parallel zueinander, in Längserstreckungsrichtung des rohrförmigen Adapterstücks verlaufenden Durchtrittsöffnungen des Strömungsgleichrichters waben- oder gitterförmig angeordnet sind. Vorzugsweise kann der Strömungsgleichrichter wenigstens fünf, wenigstens zehn oder sogar 50 und mehr Durchtrittsöffnungen aufweisen.

Eine effektive Beruhigung der Verwirbelungen kann bereits erzielt werden, wenn die Länge der Durchtrittsöffnungen des Strömungsgleichrichters in Strömungsrichtung des Volumenstromes wenigstens so groß, bevorzugt wenigstens doppelt so groß oder sogar wenigstens drei- oder zehnmal so groß wie das lichte Maß der Durchtrittsöffnungen ist.

Um genügend Platz für den Strömungsgleichrichter bereitstellen zu können, kann es sinnvoll sein, wenn das rohrförmige Adapterstück wenigstens so lang oder doppelt, bevorzugt dreimal, viermal oder sogar zehnmal so lang wie das lichte Maß seiner Eintritts- und/oder Austrittsöffnung oder noch länger ist.

Wenn die Eintrittsöffnung des Adapterstücks so groß wie die Austrittsöffnung des Adapterstücks ist, ist es möglich, dass das Anemometer sowohl an die Austrittsöffnung des Adapterstücks als auch an die Auslassöffnung des Messtrichters passt.

Um eine ausreichend lange, dem Strömungsgleichrichter nachgeschaltete Strömungsstrecke für eine zusätzliche Beruhigung des Volumenstroms nach seinem Austritt aus dem Strömungsgleichrichter zu ermöglichen, kann es außerdem günstig sein, wenn das rohrförmige Adapterstück wenigstens so lang oder besser doppelt, viermal oder sogar zehnmal so lang wie die Durchtrittsöffnungen des Strömungsgleichrichters ist.

Günstig ist es, wenn der Messtrichter mit seiner Einlassöffnung dicht oder sogar luftdicht auf die Zu- oder Abluftöffnung aufsetzbar ist.

Um Verwirbelungen in dem Volumenstrom in Strömungsrichtung hinter dem Strömungsgleichrichter zusätzlich abklingen lassen zu können, ist es besonders günstig, wenn das Adapterstück an einem ersten Rohrende eine Eintrittsöffnung für den zu messenden Volumenstrom aufweist und wenn der Strömungsgleichrichter an dem ersten Rohrende des Adapterstücks angeordnet ist.

Der Strömungsgleichrichter kann dabei in der der Eintrittsöffnung näheren Hälfte oder in dem der Eintrittsöffnung näheren Drittel oder in dem der Eintrittsöffnung näheren Fünftel des rohrförmigen Adapterstücks oder direkt an der Eintrittsöffnung angeordnet sein, so dass der Volumenstrom möglichst unmittelbar nach dem Ausströmen aus der Auslassöffnung des Messtrichters und dem Einströmen durch die Eintrittsöffnung des rohrförmigen Adapterstücks in den Strömungsgleichrichter eingeleitet werden kann. Nach Passieren des Strömungsgleichrichters kann sich der Volumenstrom beim Durchströmen des sich im Anschluss an den Strömungsgleichrichter fortsetzenden rohrförmigen Adapters weiter beruhigen, und eventuell verbliebene Verwirbelungen können weiter abklingen, bevor der Volumenstrom dem Anemometer für eine Messung zugeführt wird. Das Adapterstück kann aber auch an dem ersten Rohrende über eine Kupplung luftdicht an die Auslassöffnung des Messtrichters anschließbar oder angeschlossen sein. Die luftdichte Kupplung bietet den Vorteil, dass das Adapterstück, so an die Auslassöffnung des Messtrichters anschließbar ist, dass ein Volumenstromverlust, der eine Verfälschung der Messergebnisse zur Folge hätte, bei dem Übergang des Volumenstroms von dem Messtrichter in das rohrförmige Adapterstück vermieden werden kann.

Für die Einleitung des Volumenstroms in das Anemometer kann es zweckmäßig sein, wenn an einem zweiten Rohrende des Adapterstücks eine Austrittsöffnung für den zu messenden Volumenstrom ausgebildet ist und wenn das zweite Rohrende an das Anemometer luftdicht anschließbar oder angeschlossen ist. Somit können Volumenstromverluste beim Übergang des Volumenstroms zwischen dem rohrförmigen Adapterstück und dem Anemometer vermindert oder sogar ausgeschlossen sein. So kann eine korrekte Messung des Volumenstroms mit Hilfe des Anemometers ermöglicht werden.

Das Anemometer ist vorzugsweise als Flügelrad-Anemometer ausgebildet, kann jedoch auch ein sonstiges, zum Beispiel ein thermisches Anemometer sein.

Nachstehend ist ein Ausführungsbeispiel der Erfindung anhand der Zeichnung näher beschrieben. Es zeigen:
- Fig.1: eine schematisierte Seitenansicht einer den Stand der Technik repräsentierenden Messvorrichtung mit einem Messtrichter und einem an den Messtrichter angeschlossenen Anemometer,
- Fig.2: eine schematisierte Seitenansicht einer erfindungsgemäßen Messvorrichtung mit einem zwischen einem Messtrichter und einem Anemometer angeordneten rohrförmigen Adapterstück mit einem Strömungsgleichrichter in seinem Rohrinnenraum sowie
- Fig.3: eine Prinzipskizze eines Diagramms mit einer gestrichelten, einer gestrichpunkteten und zwei aufeinanderliegenden, durchgezogenen Messkurven, wobei die gestrichelten und die gestrichpunkteten Messkurven die Ergebnisse von Messungen mit zwei unterschiedlich rotierenden Drallauslässen mit einer Messvorrichtung ohne Adapterstück und die durchgezogenen Messkurven die Ergebnisse von Messungen dieser beiden Drallauslässe mit einer erfindungsgemäßen Messvorrichtung mit Adapterstück abbilden.

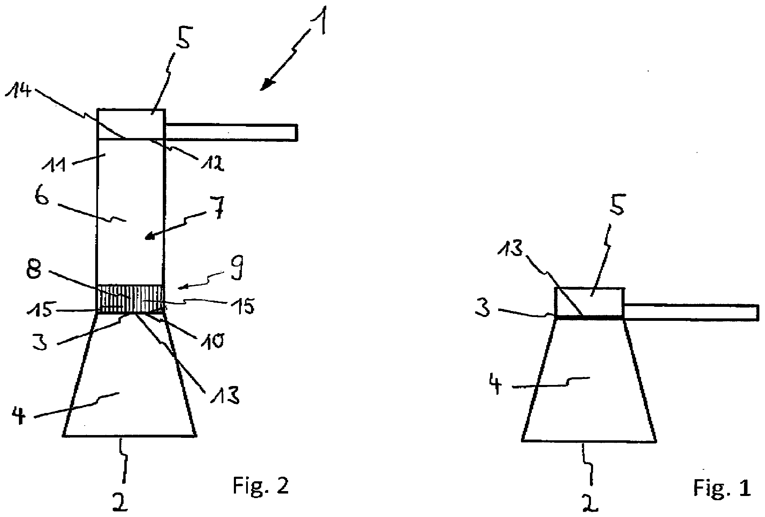

Fig. 1 zeigt eine dem Stand der Technik entsprechende Messvorrichtung zur Messung eines Volumenstromes mit einem eine Einlassöffnung 2 und eine Auslassöffnung 3 aufweisenden Messtrichter 4 und mit einem an die Auslassöffnung 3 des Messtrichters 4 angeschlossenen Anemometer 5.

Zur Messung eines Volumenstromes einer Gebäudelüftungsanlage wird der Messtrichter 4 mit seiner Einlassöffnung 2 auf eine Zu- oder Abluftöffnung einer Gebäudelüftungsanlage luftdicht aufgesetzt. Der aus der Zu- oder Abluftöffnung austretende Volumenstrom wird über die Einlassöffnung 2 des Messtrichters 4 in die Messvorrichtung eingeleitet, tritt aus der Auslassöffnung 3 des Messtrichters 4 aus und wird von dem Anemometer 5 aufgenommen und gemessen. Dabei werden verwirbelte bzw. turbulente Volumenströme dem Anemometer 5 direkt und ohne eine vorherige Gleichrichtung oder Laminarisierung zugeführt, was zu erheblichen Fehlmessungen führen kann.

Fig. 2 zeigt eine erfindungsgemäße Messvorrichtung 1. Diese Messvorrichtung 1 weist ebenfalls einen Messtrichter 4 mit einer Einlassöffnung 2 und einer Auslassöffnung 3 sowie ein Anemometer 5 auf. Im Gegensatz zu der Messvorrichtung gemäß dem Stand der Technik ist bei der Messvorrichtung 1 zwischen der Auslassöffnung 3 des Messtrichters 4 und dem Anemometer 5 ein rohrförmiges Adapterstück 6 ausgebildet, in dessen Rohrinnenraum 7 ein Strömungsgleichrichter 8 angeordnet ist.

Gemäß Fig. 2 hat das Adapterstück 6 an dem ersten Rohrende 9 eine Eintrittsöffnung 10 für den zu messenden Volumenstrom. Ferner ist zu erkennen, dass der Strömungsgleichricher 8 an diesem ersten Rohrende 9 direkt an der Eintrittsöffnung 10 des Adapterstücks 6 angeordnet ist. Dabei kann das Adapterstück 6 an dem ersten Rohrende 9 über eine nicht dargestellte Kupplung an die Auslassöffnung 3 des Messtrichters 4 lösbar angeschlossen sein.

Um den in den Messtrichter 4 und über die Eintrittsöffnung 10 des rohrförmigen Adapterstücks 6 in das rohrförmige Adapterstück 6 eingeleiteten Volumenstrom dem Anemometer 5 zuführen zu können, ist an einem zweiten Rohrende 11 des Adapterstücks 6 eine Austrittsöffnung 12 ausgebildet. Auch dieses zweite Rohrende 11 ist luftdicht an das Anemometer 5 angeschlossen.

Gemäß den Fig. 1 und 2 weist der Messtrichter 4 an seiner Auslassöffnung 3 eine Anemometeraufnahme 13 auf. Fig. 1 zeigt, dass das Anemometer 5 in diese Anemometeraufnahme 13 eingesetzt ist. Im Gegensatz dazu ist bei der Messvorrichtung gemäß Fig. 2 hier das erste Rohrende 9 des Adapterstücks 6 in die Anemometeraufnahme 13 eingesetzt, wobei das Adapterstück 6 an seinem zweiten Rohrende 11 ebenfalls eine Anemometeraufnahme 14 aufweist, in die das Anemometer 5 eingesetzt ist. Somit ist das Adapterstück 6 zwischen Messtrichter 4 und Anemometer 5 zwischengeschaltet.

Die Anemometeraufnahmen 13 und 14 sind identisch ausgebildet, so dass das Anemometer 5 wahlweise in eine der Anemometeraufnahmen 13 und 14 einsetzbar ist.

Der in Fig. 2 dargestellte Strömungsgleichrichter 8 hat zur Reduzierung der Verwirbelungen des Volumenstroms parallel zueinander und in Längserstreckung des rohrförmigen Adapterstücks 6 verlaufende Durchtrittsöffnungen 15, die, im Querschnitt betrachtet, waben- oder gitterförmig zueinander angeordnet sind. Beispielhaft sind zwei der vielen Durchtrittsöffnungen 15 bezeichnet.

Die Länge der Durchtrittsöffnungen 15 des Strömungsgleichrichters 8 ist dabei wenigstens so groß wie das lichte Maß der Durchtrittsöffnungen 15. In der schematisierten Darstellung gemäß Fig. 2 des Strömungsgleichrichters 8 sind die Durchtrittsöffnungen 15 des Strömungsgleichrichters 8 deutlich länger, beispielsweise wenigstens fünfmal länger, als ihr lichtes Maß.

Fig. 2 zeigt außerdem, dass das rohrförmige Adapterstück 6 mehr als doppelt so lang wie das lichte Maß seiner Eintritts- und/oder Austrittsöffnung 10 und 12 ist. Weiter ist die Eintrittsöffnung 10 des Adapterstücks 6 so groß wie die Austrittsöffnung 12 des Adapterstücks 6. Ferner ist zu erkennen, dass das rohrförmige Adapterstück 6 sehr viel länger als die Durchtrittsöffnungen 15 und auch als der Strömungsgleichrichter 8, also wenigstens so lang wie die Durchtrittsöffnungen 15 des Strömungsgleichrichters 8 ist.

Außerdem ist der Strömungsgleichrichter 8 im Rohrinnenraum 7 des rohrförmigen Adapterstücks 6 in dem der Eintrittsöffnung 10 näheren Fünftel des rohrförmigen Adapterstücks 6 angeordnet.

Der Rohrinnenraum 7 ist in Strömungsrichtung hinter dem Strömungsgleichrichter 8 frei oder leer ausgebildet. Der Volumenstrom kann somit im Adapterstück 6 hinter dem Strömungsgleichrichter 8 frei und/oder ungehindert strömen.

Mit der Messvorrichtung 1 gemäß Fig. 2 lässt sich das erfindungsgemäße Verfahren durchführen.

Um den Volumenstrom einer Gebäudelüftungsanlage durch ihre Zu- oder Abluftöffnung zu messen, wird der Messtrichter 2 der Messvorrichtung 1 auf die Zu- oder Abluftöffnung der Gebäudelüftungsanlage aufgesetzt. Der aus der Zu- oder Abluftöffnung austretende, häufig von einem sogenannten Drallauslass verwirbelte Volumenstrom wird über die Eintrittsöffnung 2 des Messtrichters 4 in die Messvorrichtung 1 eingeleitet. Der Volumenstrom verlässt den Messtrichter 4 über die Auslassöffnung 3 und trifft auf den Strömungsgleichrichter 8, der gemäß Fig. 2 im Rohrinnenraum 7 des rohrförmigen Adapterstücks 6 angeordnet ist.

Da das rohrförmige Adapterstück 6 luftdicht an die Auslassöffnung 3 des Messtrichters 4 angeschlossen ist, muss der zu messende Volumenstrom den Strömungsgleichrichter 8 durch die Durchtrittsöffnungen 15 durchströmen, um das in die Anemometeraufnahme 14 an dem zweiten Rohrende 11 des rohrförmigen Adapterstücks 6 ebenfalls luftdicht angeschlossene Anemometer 5 zu erreichen. Bei der Passage des Strömungsgleichrichters 8 wird der durch den Drallauslass der Gebäudelüftungsanlage verwirbelte Volumenstrom gleichgerichtet bzw. laminarisiert und Verwirbelungen werden reduziert. So werden definierte Strömungsverhältnisse erreicht.

Da der Strömungsgleichrichter 15 in einem Bereich nahe der Eintrittsöffnung 10 an dem ersten Rohrende 9 des rohrförmigen Adapterstücks angeordnet ist und der Strömungsgleichrichter 8 im Vergleich zu der Länge des rohrförmigen Adapterstücks 6 deutlich kürzer, nämlich etwa nur ein Sechstel so lang wie das Adapterstück 6, ist, steht dem Volumenstrom eine weitere zurückzulegende, etwa fünf Sechstel oder den verbleibenden Rest der Länge des Adapterstücks 6 umfassende Strömungsstrecke in dem rohrförmigen Adapterstück 6 zur Verfügung, bevor er in das Anemometer 5 eingeleitet wird. Auf dieser Strömungsstrecke kann sich der Volumenstrom weiter beruhigen und/oder Verwirbelungen können weiter abklingen.

Zur Messung wird der Volumenstrom dann aus der Austrittsöffnung 12 an dem der Eintrittsöffnung 10 gegenüberliegenden zweiten Rohrende 11 des rohrförmigen Adapterstücks in das Anemometer 5 eingeleitet. Dieses Anemometer 5 ist vorzugsweise ein Flügelrad-Anemometer, welches das lichte Maß des Rohrinnenraums 7 ausfüllt.

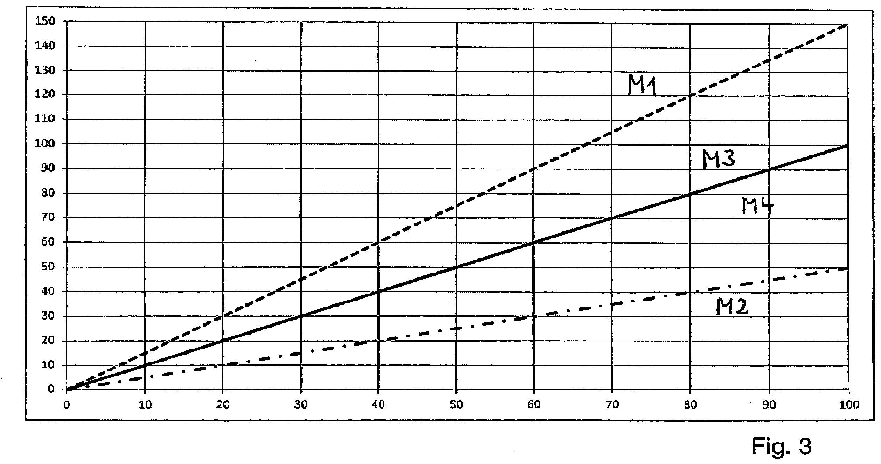

Fig. 3 zeigt eine Prinzipsskizze eines Diagramms mit Ergebnissen von Messungen zweier unterschiedlicher Gebäudelüftungsanlagen mit zwei unterschiedlichen Drallauslässen.

Die Ergebnisse wurden zum einen (M1,M2) mit der Messvorrichtung entsprechend dem Stand der Technik gemäß Fig. 1 und zum anderen (M3,M4) mit der erfindungsgemäßen Messvorrichtung 1 gemäß Fig. 2 ermittelt.

Auf der X-Achse des Diagramms sind dabei die tatsächlichen Werte oder die Sollwerte der zu messenden Volumenströme abgetragen, während die Y-Achse die mit den beiden Messvorrichtungen ermittelten Messwerte darstellt.

Die gestrichelte Messkurve M1 und die gestrichpunktete Messkurve M2 stellen die ermittelten Messergebnisse der Messvorrichtung gemäß Fig. 1 ohne zwischengeschaltetem rohrförmigen Adapterstück 6 dar.

Hierbei ist deutlich zu erkennen, dass sich bei dieser Messvorrichtung zum einen deutlich zu hohe Messwerte (Messkurve M1) bei der Messung der Volumenströme aus dem einen Drallauslass und zum anderen deutlich zu kleine Messwerte (Messkurve M2) bei der Messung der Volumenströme aus dem anderen Drallauslass mit derselben Messvorrichtung ergeben.

Die Abweichung beider Messkurven M1, M2 von den tatsächlichen Werten ist durch die Verwirbelungen, die die Drallauslässe in dem Volumenstrom erzeugen, zu erklären. Im Fall der zu hohen Messwerte der Messkurve M1 erhält das als Flügelradanemometer ausgebildete Anemometer 5 der Messvorrichtung gemäß Fig. 1 durch die Verwirbelung in dem Volumenstrom einen Impuls, der das Flügelradanemometer zusätzlich antreibt, wodurch ein höherer Messwert ermittelt wird.

Im Falle der zu kleinen Messwerte gemäß Messkurve M2 erzeugen die Verwirbelung des Volumenstroms einen Impuls, der zu einem Abbremsen des Flügelradanemometers 5 und somit zu Messwerten führt, die zu klein sind. Im Fall eines thermischen Anemometers kühlt der verwirbelte Volumenstrom stärker oder schwächer als ein beruhigter Volumenstrom, wodurch die Messung des Volumenstroms ebenfalls verfälscht sein kann.

Die beiden deckungsgleichen, durchgezogenen Linien M3 und M4 bilden die mit der erfindungsgemäßen Messvorrichtung 1 ermittelten Messwerte ab. Hierbei wird der Effekt des rohrförmigen Adapterstücks 6 mit dem in seinem Rohrinnenraum 7 angeordneten Strömungsgleichrichter 8 deutlich. Es wird nun jeweils der Sollwert gemessen. Unabhängig davon, ob ein verwirbelter Volumenstrom zugeführt wird und wie dieser orientiert ist, kann mittels der erfindungsgemäßen Messvorrichtung 1 der korrekte Wert der unterschiedlichen Volumenströme bestimmt werden, da der Strömungsgleichrichter 8 die die Messergebnisse negativ beeinflussenden Verwirbelungen in dem zu messenden Volumenstrom reduziert und/oder so weit beseitigt, dass die Messung nicht mehr beeinträchtigt wird und mit einer guten Genauigkeit erfolgen kann.

Das Adapterstück 6 stellt somit definierte Strömungseigenschaften des Volumenstroms am Anemometer 5 ein, welche nicht mehr vom vorhandenen Drallauslass abhängen.

Das Verfahren dient der Messung eines Volumenstromes durch eine Zu- oder Abluftöffnung einer Gebäudelüftungsanlage mittels der Messvorrichtung 1 und dem rohrförmigen Adapterstück 6. Dabei wird der Volumenstrom in die Einlassöffnung 2 des Messtrichters 4 der Messvorrichtung 1 eingeleitet und dem Anemometer 5 zugeführt. Um Verwirbelungen innerhalb des Volumenstroms zu reduzieren, ist zwischen der Auslassöffnung 3 des Messtrichters 4 und dem Anemometer 5 das rohrförmige Adapterstück 6 mit dem Strömungsgleichrichter 8 in seinem Rohrinnenraum 7 angeordnet. Der Volumenstrom wird durch dieses Adapterstück 6 und den Strömungsgleichrichter 8 geleitet, mit Hilfe des Strömungsgleichrichters 8 gleichgerichtet und/oder laminarisiert und im Anschluss durch die Austrittsöffnung 12 des rohrförmigen Adapters 6 dem Anemometer 5 zur Messung zugeführt.

## Patentansprüche

1. Messvorrichtung (1) zur Messung eines Volumenstromes mit einem eine Einlassöffnung (2) und eine Auslassöffnung (3) aufweisenden Messtrichter (4), wobei die Einlassöffnung (2) auf eine Zu- oder Abluftöffnung einer Gebäudelüftungsanlage setzbar ist, und mit einem an die Auslassöffnung (3) des Messtrichters (4) angeschlossenen Anemometer (5), mit einem zwischen der Auslassöffnung (3) des Messtrichters (4) und dem Anemometer (5) einsetzbaren, rohrförmigen Adapterstück (6), das ein erstes und ein zweites Rohrende (9,11) aufweist in dessen Rohrinnenraum (7) ein Strömungsgleichrichter (8) angeordnet ist, **dadurch gekennzeichnet, dass** der Messtrichter (4) an seiner Auslassöffnung (3) eine Anemometeraufnahme (13) aufweist, in welche das erste Rohrende (9) des Adapterstücks (6) einsetzbar ist, dass das Adapterstück (6) an dem zweiten Rohrende (11) eine Anemometeraufnahme (14) aufweist, in die das Anemometer (5) einsetzbar ist, und dass bei dem Adapterstück (6) der Strömungsgleichrichter (8) an dem ersten Rohrende (9) angeordnet ist, und die Anemometeraufnahme (13) des Messtrichters (4) so ausgebildet ist, dass in diese wahlweise das Anemometer (5) oder das erste Rohrende (9) des Adapterstücks (6) einsetzbar ist.

2. Messvorrichtung (1) nach Anspruch 1, **dadurch gekennzeichnet, dass** das Adapterstück (6) an einem ersten Rohrende (9) eine Eintrittsöffnung (10) für den zu messenden Volumenstrom aufweist und dass der Strömungsgleichrichter (8) an dem ersten Rohrende (9) des Adapterstücks (6) angeordnet ist.

3. Messvorrichtung (1) nach Anspruch 1 oder 2, **dadurch gekennzeichnet, dass** das Adapterstück (6) an dem ersten Rohrende (9) über eine Kupplung luftdicht an die Auslassöffnung (3) des Messtrichters (4) anschließbar oder angeschlossen ist.

4. Messvorrichtung (1) nach einem der Ansprüche 1 bis 3, **dadurch gekennzeichnet, dass** an dem zweiten Rohrende (11) des Adapterstücks (6) eine Austrittsöffnung (12) für den zu messenden Volumenstrom ausgebildet ist und dass das zweite Rohrende (11) an das Anemometer (5) luftdicht anschließbar oder angeschlossen ist.

5. Messvorrichtung (1) nach einem der Ansprüche 1 bis 4, **dadurch gekennzeichnet, dass** das Anemometer (5) ein Flügelrad-Anemometer ist.

6. Messvorrichtung (1) nach einem der vorangehenden Ansprüche, **dadurch gekennzeichnet, dass** bei dem Adapterstück (6) der Strömungsgleichrichter (8) wenigstens zwei parallel zueinander und/oder in Längserstreckungsrichtung des rohrförmigen Adapterstücks (6) verlaufende Durchtrittsöffnungen (15) aufweist und/oder dass bei dem Adapterstück (6) die- parallel zueinander, in Längserstreckungsrichtung des rohrförmigen Adapterstücks (6) verlaufenden Durchtrittsöffnungen (15) des Strömungsgleichrichters (8) gitterförmig angeordnet sind und/oder dass bei dem Adapterstück (6) die Länge der Durchtrittsöffnungen (15) des Strömungsgleichrichters (8) in Strömungsrichtung des Volumenstromes wenigstens so groß wie das lichte Maß der Durchtrittsöffnungen (15) ist.

7. Messvorrichtung (1) nach einem der vorangehenden Ansprüche, **dadurch gekennzeichnet, dass** das rohrförmige Adapterstück (6) wenigstens so lang wie das lichte Maß seiner Eintritts- und/oder Austrittsöffnung (10,12) ist und/oder dass die Eintrittsöffnung (10) des Adapterstücks (6) so groß wie die Austrittsöffnung (12) des Adapterstücks (6) ist und/oder dass das rohrförmige Adapterstück (6) wenigstens so lang wie die Durchtrittsöffnungen (15) des Strömungsgleichrichters (8) ist.

## Claims

1. Measuring device (1) for measuring a volume flow having a measuring hopper (4) comprising an inlet opening (2) and an outlet opening (3), wherein the inlet opening (2) can be placed onto an air inlet or outlet opening of a building's ventilation system, and having an anemometer (5) connected to the outlet opening (3) of the measuring hopper (4), having a tubular adapter piece (6) which can be inserted between the outlet opening (3) of the measuring hopper (4) and the anemometer (5) and which comprises a first and a second pipe end (9, 11), in the pipe inner space (7) of which a flow straightener (8) is disposed, **characterised in that** the measuring hopper (4) has an anemometer receiver (13) at its outlet opening (3), into which receiver the first pipe end (9) of the adapter piece (6) can be inserted, **in that** the adapter piece (6) comprises an anemometer receiver (14) at the second pipe end (11), into which receiver the anemometer (5) can be inserted, and **in that** in the case of the adapter piece (6) the flow straightener (8) is disposed at the first pipe end (9), and the anemometer receiver (13) of the measuring hopper (4) is formed in such a way that the anemometer (5) or the first pipe end (9) of the adapter piece (6) can be selectively inserted into it.

2. Measuring device (1) as claimed in claim 1, **characterised in that** the adapter piece (6) at a first pipe end (9) comprises an inlet opening (10) for the volume flow to be measured and that the flow straightener (8) is disposed at the first pipe end (9) of the adapter piece (6).

3. Measuring device (1) as claimed in claim 1 or 2, **characterised in that** the adapter piece (6) at the first pipe end (9) is, or can be, connected in an air-tight manner via a coupling to the outlet opening (3) of the measuring hopper (4).

4. Measuring device (1) as claimed in any one of claims 1 to 3, **characterised in that** at the second pipe end (11) of the adapter piece (6) an outlet opening (12) for the volume flow to be measured is formed and **in that** the second pipe end (11) is, or can be, connected to the anemometer (5) in an air-tight manner.

5. Measuring device (1) as claimed in any one of claims 1 to 4, **characterised in that** the anemometer (5) is a vane anemometer.

6. Measuring device (1) as claimed in any one of the preceding claims, **characterised in that** in the case of the adapter piece (6) the flow straightener (8) comprises at least two through openings (15) extending in parallel with one another and/or in the direction of longitudinal extension of the tubular adapter piece (6) and/or **in that** in the case of the adapter piece (6) the through openings (15) of the flow straightener (8) which extend in parallel with one another in the direction of longitudinal extension of the tubular adapter piece (6) are disposed in a grid-like manner and/or **in that** in the case of the adapter piece (6) the length of the through openings (15) of the flow straightener (8) in the flow direction of the volume flow is at least as great as the open dimension of the through openings (15).

7. Measuring device (1) as claimed in any one of the preceding claims, **characterised in that** the tubular adapter piece (6) is at least as long as the open dimension of its inlet and/or outlet opening (10, 12) and/or **in that** the inlet opening (10) of the adapter piece (6) is as large as the outlet opening (12) of the adapter piece (6) and/or **in that** the tubular adapter piece (6) is at least as long as the through openings (15) of the flow straightener (8).

## Revendications

1. Dispositif de mesure (1) pour la mesure d'un débit de volume avec un entonnoir de mesure (4) présentant une ouverture d'entrée (2) et une ouverture de sortie (3), dans lequel l'ouverture d'entrée (2) peut être disposée sur une ouverture d'admission ou d'évacuation d'air d'une installation de ventilation d'un bâtiment, et avec un anémomètre (5) raccordé à l'ouverture de sortie (3) de l'entonnoir de mesure (4), avec une pièce d'adaptateur tubulaire (6) insérable entre l'ouverture de sortie (3) de l'entonnoir de mesure (4) et l'anémomètre (5), qui présente une première et une deuxième extrémités de tube (9, 11) et dans l'espace intérieur tubulaire (7) de laquelle est disposé un redresseur d'écoulement (8), **caractérisé en ce que** l'entonnoir de mesure (4) présente à son ouverture de sortie (3) un logement d'anémomètre (13), dans lequel la première extrémité de tube (9) de la pièce d'adaptateur (6) peut être introduite, **en ce que** la pièce d'adaptateur (6) présente à la deuxième extrémité de tube (11) un logement d'anémomètre (14), dans lequel l'anémomètre (5) peut être introduit, et **en ce que** le redresseur d'écoulement (8) est disposé près de la pièce d'adaptateur (6) à la première extrémité de tube (9), et le logement d'anémomètre (13) de l'entonnoir de mesure (4) est configuré de telle manière que l'anémomètre (5) ou la première extrémité de tube (9) de la pièce d'adaptateur (6) puisse au choix être introduit(e) dans celui-ci.

2. Dispositif de mesure (1) selon la revendication 1, **caractérisé en ce que** la pièce d'adaptateur (6) présente à une première extrémité de tube (9) une ouverture d'entrée (10) pour le débit volumique à mesurer et **en ce que** le redresseur d'écoulement (8) est disposé à la première extrémité de tube (9) de la pièce d'adaptateur (6).

3. Dispositif de mesure (1) selon la revendication 1 ou 2, **caractérisé en ce que** la pièce d'adaptateur (6) peut être ou est raccordée hermétiquement par sa première extrémité de tube (9) à l'ouverture de sortie (3) de l'entonnoir de mesure (4) au moyen d'un couplage.

4. Dispositif de mesure (1) selon l'une quelconque des revendications 1 à 3, **caractérisé en ce qu'**une ouverture de sortie (12) pour le débit volumique à mesurer est formée à la deuxième extrémité de tube (11) de la pièce d'adaptateur (6) et **en ce que** la deuxième extrémité de tube (11) peut être ou est raccordée hermétiquement à l'anémomètre (5).

5. Dispositif de mesure (1) selon l'une quelconque des revendications 1 à 4, **caractérisé en ce que** l'anémomètre (5) est un anémomètre à hélice.

6. Dispositif de mesure (1) selon l'une quelconque des revendications précédentes, **caractérisé en ce que** près de la pièce d'adaptateur (6) le redresseur d'écoulement (8) présente au moins deux ouvertures de passage (15) s'étendant parallèlement l'une à l'autre et/ou dans la direction d'extension longitudinale de la pièce d'adaptateur tubulaire (6) et/ou **en ce que** près de la pièce d'adaptateur (6) les ouvertures de passage (15) du redresseur d'écoulement (8) s'étendant parallèlement l'une à l'autre et dans la direction d'extension longitudinale de la pièce d'adaptateur tubulaire (6) sont disposées en forme de grille et/ou **en ce que** près de la pièce d'adaptateur (6) la longueur des ouvertures de passage (15) du redresseur d'écoulement (8) dans la direction d'écoulement du débit de volume est au moins aussi grande que la dimension libre des ouvertures de passage (15).

7. Dispositif de mesure (1) selon l'une quelconque des revendications précédentes, **caractérisé en ce que** la pièce d'adaptateur tubulaire (6) est au moins aussi longue que la dimension libre de son ouverture d'entrée et/ou de sortie (10, 12) et/ou **en ce que** l'ouverture d'entrée (10) de la pièce d'adaptateur (6) est aussi grande que l'ouverture de sortie (12) de la pièce d'adaptateur (6) et/ou **en ce que** la pièce d'adaptateur tubulaire (6) est au moins aussi longue que les ouvertures de passage (15) du redresseur d'écoulement (8).
